# DEMANDE DE BREVET EUROPEEN

(11) **EP 0 634 597 A1**
(43) Date de publication de la demande: **18.01.1995**
(21) Numéro de dépôt: 94201924.1
(22) Date de dépôt: 05.07.1994
(51) Int. Cl.: F16L 11/08, F16L 9/133

(54) **Tuyau à imperméabilité élevée vis-à-vis des hydrocarbures**

(30) Priorité: 14.07.1993 BE 9300733
(71) Demandeur: SOLVAY (Société Anonyme), B-1050 Bruxelles (BE)
(72) Inventeur: Delimoy, Didier, B-1325 Chaumont-Gistoux (BE); Dupont, Serge, B-1800 Vilvoorde (BE)
(74) Mandataire: Dufrasne, Eugène

(57) **Abrégé**

Tuyau à imperméabilité élevée vis-à-vis des hydrocarbures, comprenant au moins une couche intérieure (A) et une couche extérieure (B) concentrique à la couche intérieure (A), toutes deux en matières thermoplastiques, dans lequel la couche extérieure (B) est une couche barrière constituée d'au moins deux matières thermoplastiques immiscibles, dont l'une est imperméable et dispersée dans les autres constituants de cette couche (B) de façon à y former une pluralité de lamelles substantiellement parallèles à la paroi du tuyau. Le tuyau peut éventuellement être renforcé par au moins une structure de renfort fibreux, par exemple par au moins un enroulement filamentaire ou un tissu de fibres, la couche barrière (B) extérieure jouant alors, en outre, un rôle de protection mécanique et permettant d'améliorer le calibrage extérieur. Un tel tuyau s'utilise avantageusement pour la distribution d'eau potable par des canalisations enterrées dans des sols éventuellement pollués.

## Description

La présente invention concerne un tuyau en matière thermoplastique, éventuellement renforcé, dont la structure empêche la perméation de polluants organiques extérieurs, tels que des hydrocarbures, vers le fluide véhiculé par celui-ci. Le tuyau conforme à l'invention convient avantageusement pour la distribution d'eau courante, et en particulier d'eau potable, par des canalisations souterraines.

Les matières thermoplastiques sont de plus en plus couramment utilisées pour la fabrication de tuyaux ou canalisations enterrés dans le sol et destinés à la distribution ou au transport de fluides. L'une des familles de matières thermoplastiques les plus couramment utilisées pour ce genre d'applications est celle constituée par les polyoléfines et, en particulier, celle des polymères dérivés de l'éthylène. Une autre famille de matières thermoplastiques utilisables est constituée par les résines vinyliques telles que le polychlorure de vinyle (PVC). Ces matériaux, souvent retenus en raison des nombreux avantages qu'ils offrent, présentent cependant une imperméabilité pouvant se révéler insuffisante vis-a-vis de certaines substances organiques, notamment vis-à-vis des hydrocarbures. Or, il n'est pas rare que les terrains dans lesquels doivent être enfouies les canalisations soient pollués, notamment par des hydrocarbures ou d'autres substances organiques. Dans ces conditions, il est essentiel de veiller à ce qu'il n'y ait pas de perméation des polluants extérieurs au travers de la paroi des tuyaux, de manière à éviter l'apparition de traces de ces produits dans le fluide véhiculé. Ce problème est particulièrement important dans le cas d'une distribution d'eau potable.

En outre, les tuyaux constitués de ces matières thermoplastiques et exposés à l'action de substances organiques doivent être protégés des risques de dégradation chimico-mécanique, afin d'éviter une diminution de leur résistance mécanique et de l'étanchéité de leurs soudures et raccords, ainsi qu'un risque de délamination dans le cas de l'exploitation de tuyaux multicouches. En présence d'hydrocarbures, en particulier, on souhaite éviter que les articles constitués de polyoléfines subissent un gonflement, et que ceux à base de résines vinyliques telles que le PVC subissent une plastification accroissant leur perméabilité et conduisant à une diminution des propriétés mécaniques.

Plusieurs solutions ont déjà été proposées en vue d'améliorer l'imperméabilité de tuyaux ou de corps creux constitués de matières thermoplastiques, ces solutions ayant généralement pour but d'empêcher la perméation du fluide transporté vers l'extérieur du tuyau.

Ainsi, il a déjà été proposé d'entourer des tuyaux de matière plastique d'une mince feuille d'aluminium. Cette solution donne certes de bons résultats, mais est d'une mise en oeuvre complexe et coûteuse, et rend le recyclage de tels tuyaux pratiquement impossible. On vise ici non seulement le recyclage à long terme, après une utilisation normale des tuyaux durant plusieurs années, mais également le recyclage à court terme, c'est-à-dire le recyclage des déchets générés durant les différentes étapes de fabrication des tuyaux.

Une autre technique connue consiste à soumettre la surface de corps creux en matière plastique, notamment de réservoirs à carburant, à un traitement chimique, par exemple à une fluoration, mais cette opération ne peut généralement pas être effectuée sur la surface interne de tuyaux en raison des risques de contamination des fluides véhiculé. Elle peut d'autre part difficilement être appliquée à leur surface externe, car un tel traitement chimique conduit à la formation d'une couche imperméabilisante de très faible épaisseur, généralement inférieure au micron, ce qui la rend extrêmement vulnérable vis-à-vis des conditions sévères auxquelles les tuyaux sont soumis pendant leur transport, leur pose, et même ultérieurement, par exemple, en raison de travaux de voirie.

Une troisième solution consiste à fabriquer des corps creux multicouches, par exemple par co-extrusion, dans lesquels l'une des couches, qualifiée de couche barrière, est entièrement constituée d'une matière plastique de faible perméabilité, par exemple de polyamides ou de polymères fluorés. Le coût de telles matières plastiques est cependant élevé, ce qui implique l'utilisation de couches très minces de ces matériaux, d'où résulte de nouveau un problème de fragilité. Par ailleurs, même si la couche barrière est à l'abri de dégradations mécaniques, ses éventuelles fluctuations d'épaisseur imposent de lui donner une épaisseur plus importante que strictement nécessaire, ce qui est en contradiction avec les impératifs économiques. De plus, la réalisation d'une couche barrière distincte impose l'utilisation d'un outillage de fabrication plus complexe, ainsi que, dans certains cas, l'usage de couches intermédiaires adhésives, qui en compliquent le recyclage.

C'est pourquoi la présente invention vise à fournir un tuyau en matière thermoplastique de coût modéré, présentant une bonne imperméabilité et facilement recyclable.

A cette fin, le premier objet de la présente invention concerne un tuyau à imperméabilité élevée vis-à-vis des hydrocarbures, comprenant au moins une couche intérieure (A) en matière thermoplastique et une couche extérieure (B) également en matière thermoplastique, concentrique à la couche intérieure (A), qui se caractérise en ce que la couche extérieure (B) est une couche barrière constituée d'au moins deux matières thermoplastiques immiscibles, au moins une de ces matières thermoplastiques (P) étant imperméable et étant dispersée dans les autres constituants de cette couche extérieure (B) de façon à y former une pluralité de lamelles étagées substantiellement parallèles à la paroi du tuyau.

La couche intérieure (A), qui assure la rigidité mécanique du tuyau, est généralement constituée d'une matière thermoplastique courante et de faible coût, qui est compatible avec la nature du fluide véhiculé. De préférence la couche (A) est majoritairement constituée d'au moins un polymère dérivé d'oléfines (polyoléfine), de préférence de l'éthylène, et en particulier de polyéthylène (PE). Elle peut également comprendre des résines vinyliques telles que le PVC. Cette couche peut également contenir divers additifs tels que des stabilisants, des anti-oxydants, des lubrifiants, des pigments, des charges minérales, des particules conductrices de l'électricité, des fibres de verre, etc., pour autant que ces additifs n'influencent pas excessivement son imperméabilité. De manière préférée, la couche intérieure (A) est majoritairement constituée d'au moins une polyoléfine.

La couche intérieure (A) peut, en outre, être constituée de plusieurs couches individuelles, à base de matières thermoplastiques différentes et/ou contenant des additifs différents. Ainsi, pour des raisons économiques et écologiques, la couche intérieure (A) peut comprendre au moins deux couches, dont l'une est constituée d'une matière thermoplastique recyclée et/ou expansée.

La couche barrière (B), comme son nom l'indique, a pour but de s'opposer à la perméation de polluants présents dans le sol vers le fluide transporté dans le tuyau. Cette couche (B), de structure particulière, est majoritairement constituée d'au moins une matière thermoplastique courante (C), par exemple d'au moins une polyoléfine, au sein de laquelle est dispersée, en proportions minoritaires, au moins une autre matière thermoplastique (P) qui y est immiscible. Cette matière thermoplastique (P) doit présenter une bonne imperméabilité, notamment vis-à-vis des hydrocarbures, et est, à cette fin, de préférence choisie parmi les polyamides, les copolymères de l'éthylène et de l'acétate de vinyle hydrolysé (EVOH) les polymères fluorés (tels que par exemple le PVDF) et les polyesters. De préférence, elle est choisie parmi les polyamides semi-cristallins de température de fusion inférieure à environ 230 °C et les EVOH dont la teneur en éthylène est inférieure à environ 40 % en poids.

Cette matière thermoplastique imperméable (P) est dispersée au sein de la matière thermoplastique courante (C) de manière à y former une pluralité de lamelles étagées et orientées sensiblement parallèlement à la paroi du tuyau. Ces lamelles forment ainsi un réseau de micro-chicanes qui s'oppose à la perméation au travers de la matière thermoplastique (C), dont l'imperméabilité aux hydrocarbures ne doit pas nécessairement être excellente.

Pour obtenir une répartition adéquate en lamelles de la matière thermoplastique imperméable (P) au sein de la matière thermoplastique (C), il est généralement souhaitable de compatibiliser ces deux matières thermoplastiques. Cette compatibilisation peut se faire par l'ajout, aux matières thermoplastiques (C) et (P), d'un compatibilisant. Ce compatibilisant joue un rôle d'adhésif entre les matières thermoplastiques (C) et (P), généralement immiscibles, et garantit leur bonne dispersion, empêchant que la formation de sortes de nodules ne conduise pas à l'effet de chicane escompté. A cette fin, le compatibilisant peut notamment être un polymère connu pour ses propriétés adhésives vis-à-vis des matières thermoplastiques (C) et (P).

Les matières thermoplastiques (C) et (P) constitutives de la couche extérieure (B) peuvent également être compatibilisées par modification chimique au moins partielle d'au moins un de leurs constituants, c'est-à-dire par modification chimique d'au moins un des polymères constitutifs de la matière thermoplastique courante (C) et/ou d'au moins un des polymères constitutifs de la matière thermoplastique imperméable (P). Cette modification chimique peut notamment consister en un greffage ou en une copolymérisation avec un monomère fonctionnel approprié. Ainsi, lorsque la matière thermoplastique courante (C) est essentiellement composée de polyéthylène, on peut par exemple utiliser comme compatibilisant un copolymère de l'éthylène et d'un acide insaturé tel que l'anhydride maléique.

De plus amples informations concernant la composition et l'obtention de telles couches barrières (B) contenant des lamelles de matière thermoplastique imperméable (P) peuvent être notamment trouvées dans le brevet US-A-4 410 482 et dans la demande de brevet EP-A-238 197, qui sont incorporés par référence.

La proportion de matière thermoplastique imperméable (P) incorporée au sein de la matière thermoplastique courante (C) est choisie en fonction de plusieurs paramètres, tels que la concentration maximale de polluants admissible dans le fluide transporté, qui dépend de l'application visée, du débit du fluide dans le tuyau, des épaisseurs des couches (A) et (B), de la concentration maximale des polluants dans le milieu extérieur, etc. En général, la proportion de matière thermoplastique imperméable (P) incorporée au sein de la matière thermoplastique (C) est de l'ordre de 2 à 20 % en poids.

La matière thermoplastique courante (C) et celle constitutive de la couche intérieure (A) ne doivent pas nécessairement être identiques. Il est toutefois préférable qu'elles soient au moins de la même famille, par exemple toutes deux des polyoléfines, ce qui améliore leur adhérence commune et la recyclabilité du produit. Si ce n'est pas le cas, il peut être utile d'interposer entre la couche intérieure (A) et la couche barrière (B) une couche d'un adhésif adapté à la paire de matières thermoplastiques (A)/(C). Lorsque la couche intérieure (A) est elle-même constituée de plusieurs couches, ces considérations s'appliquent également à chaque paire de couches adjacentes.

La couche barrière (B) peut être disposée autour de la couche intérieure (A) par toute technique de mise en oeuvre convenable, notamment par coextrusion ou par gaînage.

Les tuyaux conformes à l'invention présentent une imperméabilité supérieure à celle de tuyaux d'épaisseur identique mais monocouches, dans lesquels la même quantité de matière thermoplastique imperméable (P) serait dispersée uniformément dans toute la paroi du tuyau et non localisée dans une couche extérieure homogène.

Dans le cas du transport de liquides sous des pressions élevées, il peut en outre se poser un problème de résistance mécanique pour les tuyaux de distribution. L'une des solutions à ce problème est naturellement d'augmenter l'épaisseur de leur paroi, mais cette solution est coûteuse et encombrante, aussi a-t-il déjà été proposé de renforcer des tuyaux par des structures de renfort fibreux, par exemple en disposant à leur surface un ou plusieurs enroulements filamentaires, ou encore un tissu de fibres minérales.

Une technique de renforcement par un enroulement filamentaire est décrite par exemple dans le brevet BE-A-890 362, et consiste à enrouler autour d'un tuyau, de manière quasiment perpendiculaire à son axe, un ou plusieurs faisceaux continus de fibres de longueur élevée, telles que des fibres de verre, de manière à former des spires jointives. Ces faisceaux de fibres continues sont habituellement noyés dans une matrice de matière thermoplastique (F), ou font partie de faisceaux co-mêlés de fibres de verre et de fibres d'une matière thermoplastique (F) (commingled fibers), qui présentent une plus grande souplesse avant leur mise en oeuvre.

Quel que soit le type de faisceau de fibres utilisé, son enroulement autour d'un tuyau se fait de préférence à chaud, ce qui améliore son adhérence au tuyau grâce à la fusion superficielle de la couche extérieure du tuyau et de la matière thermoplastique (F) présente dans le faisceau.

On peut également assurer le renforcement du tuyau par des tissus de fibres minérales constitués d'une pluralité de fibres de renfort, par exemple de fibres de verre, de longueur élevée, orientées selon au moins deux directions différentes. De même que dans le cas des faisceaux co-mêlés, des fibres de matière thermoplastique (F) peuvent être mélangées aux fibres minérales; ces fibres de matière thermoplastique jouant, après leur fusion lors de la mise en oeuvre à chaud du tissu, le rôle de matrice pour les fibres minérales. Toutes ces fibres peuvent être tissées entre elles ou former deux ou plusieurs nappes superposées.

Les fibres utilisées dans les structures de renfort fibreux sont généralement des fibres minérales, par exemple, de façon non limitative, des fibres de verre ou de carbone. Ces fibres sont habituellement utilisées en grand nombre (typiquement plusieurs centaines par mm² de section), et leur diamètre est couramment de l'ordre de 7 à 100 µm.

Qu'il s'agisse d'enroulements filamentaires ou de tissus de fibres, ces structures de renfort fibreux sont habituellement disposées à la surface des tuyaux, ce qui pose certains problèmes particuliers, en plus des problèmes déjà évoqués précédemment, lorsque des tuyaux ainsi renforcés sont enterrés dans des sols pollués.

Un premier problème est que la dégradation chimicomécanique déjà évoquée des matières plastiques sous l'effet des polluants risque, au fil du temps, d'affecter l'adhérence fibres minérales à leur matrice de matière thermoplastique, conduisant ainsi à des risques d'éclatement du tuyau.

Un second problème est celui de la vulnérabilité des structures de renfort fibreux disposées à la surface des tuyaux. Au cours de leur manutention, de leur pose et même pendant toute la durée de vie des tuyaux ainsi renforcés, les structures de renfort fibreux situées à la surface des tuyaux sont directement exposées à des agressions mécaniques (notamment d'outils ou d'objets acérés présents dans le sol) et risquent donc d'être endommagées, réduisant ainsi dangereusement la résistance locale du tuyau à la pression interne.

Un troisième problème est celui de la précision dimensionnelle des tuyaux renforcés. En effet, lorsque des structures de renfort fibreux sont disposées à la surface d'un tuyau, le diamètre extérieur de celui-ci est susceptible de fluctuer, à la fois en raison de la présence des structures de renfort fibreux et en raison des effets déjà cités de certains polluants organiques (gonflement, ...). De telles fluctuations de diamètre peuvent être extrêmement gênantes lorsqu'il s'agit de raccorder des tuyaux à des organes de diamètre bien précis tels que manchons, raccords, vannes, etc.

Il découle de ces considérations le double objectif supplémentaire d'obtenir une imperméabilisation protégeant le tuyau proprement dit et ses structures de renfort fibreux des effets des polluants extérieurs, et de ramener les fluctuations de diamètre à des valeurs acceptables.

A cette fin, un second objet de la présente invention est de procurer un tuyau renforcé présentant une vulnérabilité et une perméabilité réduites, un diamètre sensiblement constant, ainsi que les avantages cités précédemment sur les plans de l'économie et de la recyclabilité.

De manière plus précise, le second objet de l'invention concerne un tuyau constitué d'une couche intérieure (A) et d'une couche extérieure (B) présentant la structure particulière décrite précédemment, qui se caractérise en ce que la couche intérieure (A) est renforcée par au moins une structure de renfort fibreux. Pour les raisons exposées ci-dessus, un tuyau présentant une telle structure est particulièrement avantageux lorsque les structures de renfort fibreux sont mises en oeuvre sous la forme d'au moins un enroulement filamentaire ou d'au moins un tissu de fibres minérales. De manière préféréé la couche (A) est renforcée par au moins deux enroulements filamentaires de sens d'enroulement opposés. Qu'il s'agisse d'enroulements filamentaires ou de tissus de fibres, ces structures de renfort fibreux comportent avantageusement une matière thermoplastique (F) destinée à servir de matrice aux fibres, cette matière thermoplastique (F) pouvant elle-même être présente sous forme de fibres (dans les tissus de fibres et les faisceaux co-mêlés) ou bien imprégner un faisceau de fibres avant la mise en oeuvre des structures de renfort. Dans ce dernier cas, les faisceaux de fibres sont imprégnés d'une matière thermoplastique (F) dans des conditions opératoires soigneusement contrôlées, afin de garantir l'adhésion des fibres à cette matière thermoplastique.

Quel que soit le type de structure de renfort fibreux utilisé la matière thermoplastique (F) jouant le rôle de matrice des fibres minérales appartient de préférence à la même famille que la matière thermoplastique constitutive de la couche intérieure (A) du tuyau (que nous appellerons plus simplement "la matière thermoplastique (A)" par la suite), ce qui améliore leur adhérence mutuelle, sans que cela ne constitue une obligation. Les mêmes considérations s'appliquent à la paire de matières thermoplastiques (C) et (F). En général, on préfère que les trois matières thermoplastiques (A), (C) et (F) soient identiques ou appartiennent à une même famille. Une telle situation est en effet avantageuse à la fois sur le plan de la cohésion, de la soudabilité et de la recyclabilité des tuyaux. De manière préférée, les matières thermoplastiques (A), (C) et (F) sont toutes trois des polyoléfines, et de manière particulièrement préférée des polymères dérivés de l'éthylène. Il n'est cependant pas indispensable, dans ce cas, que ces trois matières thermoplastiques soient rigoureusement identiques. Ainsi, à titre d'exemple, on peut utiliser du PE haute densité pour les matières thermoplastiques (A) et (C), et un PE partiellement fonctionnalisé et de fluidité élevée comme matière thermoplastique (F). Comme exposé précédemment, l'utilisation d'un adhésif, ou le recours à une modification chimique, peut être utile lorsque deux de ces trois matières thermoplastiques présentent une compatibilité insuffisante (par exemple (A) vis-à-vis de (F) ou (F) vis-à-vis de (C)). Dans le cas où la couche intérieure (A) est elle-même constituée de plusieurs couches, les remarques qui précèdent concernent la couche la plus extérieure de la couche (A).

La nature de la couche barrière (B) a déjà été décrite ci-dessus. Cette couche barrière est disposée à la surface extérieure de la couche intérieure (A), par exemple par coextrusion ou par extrusion-couchage, après que celle-ci ait été renforcée par une ou plusieurs structures de renfort fibreux. Lors du choix de l'épaisseur de cette couche (B), il convient de tenir compte non seulement de l'épaisseur nécessaire à l'obtention d'un niveau d'imperméabilité donné, mais encore des fluctuations maximales du diamètre extérieur de la couche (A) renforcée par sa ou ses structure(s) de renfort fibreux. La couche barrière (B) peut également être disposée à la surface extérieure de la couche (A) par gaînage, ce qui permet d'utiliser un appareillage simplifié et est donc avantageux. Dans ce cas, le gaînage de la couche (B) s'effectue de préférence après avoir réchauffé le tuyau intermédiaire constitué de la couche (A) renforcée par sa ou ses structure(s) de renfort fibreux.

Les tuyaux renforcés et protégés par une couche barrière comme décrit ci-dessus, s'utilisent de manière avantageuse pour la distribution d'eau courante par canalisations enterrées dans des sols pollués. Ce domaine d'utilisation n'est cependant pas restrictif, les tuyaux de l'invention pouvant tout aussi bien s'utiliser pour véhiculer des liquides autres que de l'eau, et même des gaz.

Les exemples qui suivent visent à illustrer l'invention de façon non limitative. (L'exemple 1R est un exemple comparatif; les exemples 2 et 3 sont conformes à l'invention).

### Exemples 1 à 3

Des tuyaux de différentes structures ont été réalisés sur une ligne constituée d'une extrudeuse PRODEX® 3,5 pouces munie d'une vis à taux de compression 2,5 et de rapport L/D = 24. La tête d'extrusion REIFENHÄUSER® était munie d'une filière de diamètre 115,5 mm et d'un noyau de 109,9 mm de diamètre.

Des tuyaux de diamètre extérieur nominal 110 mm et d'épaisseur 3 mm ont été réalisés à partir des matériaux suivants :

| Exemple | Matériau | |
|---|---|---|
| 1R | PEHD ELTEX® TUB71 | |
| 2 | PEHD ELTEX TUB71 | 93 % en masse |
| | SELAR® type SE3502 | 7 % en masse |
| 3 | PEHD ELTEX TUB71 | 93 % en masse |
| | SELAR type SE3502 | 7 % en masse |

Le tuyau de l'exemple 2 a été réalisé sans dispositif dans la filière permettant de filtrer le polymère fondu. Dans le cas de l'exemple 3, un support de filtre "plaque à trous" a été positionné dans la filière en aval des ailettes de fixation du noyau. Ce filtre est constitué d'une plaque métallique percée de 1344 trous de 2,5 mm de diamètre répartis uniformément.

Dans les 3 cas, la vitesse de rotation de la vis était de 29,5 tr/min et le débit de 39 kg/h.

Des mesures de perméabilité au toluène ont été effectuées sur les 3 tuyaux obtenus. Les conditions de test sont les suivantes :
La cellule de test contient un tronçon du tuyau à analyser, et est thermostatisée à 40 °C. Le liquide perméant - ici le toluène - se situe à l'extérieur du tuyau. A l'intérieur du tuyau circule en continu un gaz porteur (hélium) qui entraîne le produit perméant ayant traversé la paroi constituée par le tuyau à tester. La concentration en perméant - toluène - dans le gaz porteur est détectée en continu par un système de chromatographie en phase gazeuse munie d'une cellule FID (à ionisation de flamme). La surface de tuyau en contact avec le perméant est de 69 cm².

Cette méthode dynamique permet ainsi de suivre l'augmentation de la perméabilité des structures au perméant dans la phase transitoire et de déterminer l'apparition du régime stationnaire de perméabilité, à partir duquel le coefficient de perméabilité est constant et peut être quantifié.

Le tableau suivant reprend les valeurs des coefficients mesurés pour les 3 tuyaux réalisés. (Un coefficient de perméabilité d'1 g.mm/m².jour correspond à une perte de perméant d'1 g par jour dans un tuyau dont la surface interne en contact avec le perméant est d'1 m², et l'épaisseur 1 mm).

| Exemple | Durée de la phase transitoire (heures) | Coefficient de perméabilité en régime stationnaire (g.mm/m².jour) |
|---|---|---|
| 1R | 60 | 185 |
| 2 | 200 | 17 |
| 3 | 250 | 32 |

On constate clairement la supériorité des tuyaux conformes à l'invention.

## Revendications

1. Tuyau à imperméabilité élevée vis-à-vis des hydrocarbures, comprenant au moins une couche intérieure (A) en matière thermoplastique et une couche extérieure (B) également en matière thermoplastique, concentrique à la couche intérieure (A), caractérisé en ce que la couche extérieure (B) est une couche barrière constituée d'au moins deux matières thermoplastiques immiscibles, au moins une de ces matières thermoplastiques (P) étant imperméable et étant dispersée dans les autres constituants de cette couche extérieure (B) de façon à y former une pluralité de lamelles étagées substantiellement parallèles à la paroi du tuyau.

2. Tuyau selon la revendication 1, caractérisé en ce que la couche intérieure (A) est renforcée par au moins une structure de renfort fibreux.

3. Tuyau selon la revendication 2, caractérisé en ce que la structure de renfort fibreux est mise en oeuvre sous la forme d'au moins un tissu de fibres.

4. Tuyau selon la revendication 2, caractérisé en ce que la structure de renfort fibreux est mise en oeuvre sous la forme d'au moins un enroulement filamentaire.

5. Tuyau selon la revendication 4, caractérisé en ce que la couche intérieure (A) est renforcée par au moins deux enroulements filamentaires de sens d'enroulement opposés.

6. Tuyau selon l'une des revendications précédentes, caractérisé en ce que la couche intérieure (A) est majoritairement constituée d'au moins une polyoléfine.

7. Tuyau selon l'une des revendications précédentes, caractérisé en ce que la couche intérieure (A) comprend elle-même au moins deux couches, dont l'une est constituée d'une matière thermoplastique recyclée et/ou expansée.

8. Tuyau selon l'une des revendications précédentes, caractérisé en ce que la matière thermoplastique imperméable (P) est choisie dans le groupe comprenant les polyamides, les copolymères d'éthylène et d'acétate de vinyle hydrolysés, les polymères fluorés et les polyesters.

9. Tuyau selon l'une des revendications précédentes, caractérisé en ce que les matières thermoplastiques constitutives de la couche extérieure (B) sont compatibilisées par modification chimique au moins partielle d'au moins un de leurs constituants.
